# EUROPEAN PATENT SPECIFICATION

(11) **EP 4 044 356 B1**
(45) Date of publication and mention of the grant of the patent: **01.01.2025**
(21) Application number: 21870549.9
(22) Date of filing: 06.08.2021
(51) Int. Cl.: H01M 50/538, H01M 50/107, H01M 50/109, H01M 4/64, H01M 4/70, H01M 50/609

(54) **COLLECTOR PLATE AND CYLINDRICAL LITHIUM BATTERY**
KOLLEKTORPLATTE UND ZYLINDRISCHE LITHIUMBATTERIE
PLAQUE COLLECTRICE ET BATTERIE AU LITHIUM CYLINDRIQUE

(30) Priority: 29.10.2020 CN 202011178413
(43) Date of publication of application: 17.08.2022
(73) Proprietor: Shenzhen Bak Power Battery Co., Ltd., Shenzhen, Guangdong 518000 (CN)
(72) Inventor: ZHAO, Junfeng, Shenzhen, Guangdong 518000 (CN)
(74) Representative: Eisenführ Speiser
(86) International application number: PCT/CN2021/111287
(87) International publication number: WO 2022/088827

(56) References cited:
- WO-A2-2007/134091
- CN-A- 102 306 712
- CN-A- 102 629 688
- CN-A- 106 410 102
- CN-U- 204 441 382
- CN-U- 206 711 986
- CN-U- 208 284 552
- CN-U- 211 789 215
- CN-U- 213 520 044
- JP-A- 2007 250 442
- US-A1- 2005 260 487

## Description

### TECHNICAL FIELD

The present application relates to the technical field of lithium battery, and more particularly to a current collecting plate and a cylindrical lithium battery.

### BACKGROUND

With the development of economy and society, batteries, especially lithium batteries, are developing rapidly. Due to the high specific energy, long life, and green environmental protection, lithium batteries have attracted more and more attention, and the lithium batteries will have broad application prospects in electric vehicle power sources and energy storage power sources.

The existing cylindrical battery includes a battery case, an electrode group arranged in the battery case, a current collecting plate arranged at the end of the electrode group, and the current collecting plate is provided with several liquid guiding holes, the speed and uniformity of the electrolyte permeating the battery electrode group can be accelerated by the arrangement of the several liquid guiding holes. However, the liquid guiding is carried out through the liquid guiding holes on the current collecting plate, so that there is still an area under the current collecting plate that cannot get the electrolyte infiltrated at the first time, resulting in poor penetration consistency of the pole pieces, and the injection takes a long time.

A Chinese application CN208284552U disclosed speed and homogeneity that electrolyte soaks battery pole group can be accelerated in this application, improves battery filling efficiency and battery quality.

A Chinese application CN106410102A disclosed a circular anode bus disc with four-segment semicircular tabs. The circular anode bus disc comprises an anode bus disc body, a central liquid absorbing hole, liquid absorbing hole groups, four laser welding areas and the tabs, wherein the central liquid absorbing hole, the liquid absorbing hole groups, the four laser welding areas and the tabs are arranged on the anode bus disc body, the central liquid absorbing hole is formed in the center of the anode bus disc body, the four laser welding areas are distributed on the front face of the anode bus disc body evenly, the liquid absorbing hole group and the tab are arranged between each two adjacent laser welding areas, each tab is positioned on the inner side of the corresponding liquid absorbing hole group, and the tabs are formed by outward turnover of sector areas arranged on the anode bus disc body and form a four-segment circular wall.

An international application WO2007134091A2 disclosed a cylindrical electrochemical cell which includes a first electrode and a second electrode which is a counter electrode to the first electrode, and an electrolyte. The first electrode includes a polyanion-based electrode active material.

A US application US20050260487A1 disclosed a secondary battery includes an electrode group with both positive and negative electrodes and a separator interposed therebetween and a case wherein the electrode group is located. A cap assembly is combined with the case, seals it, and is electrically connected to the electrode group.

### TECHNICAL PROBLEM

An object of an embodiment of the present application is to provide a current collecting plate, in order to solve the technical problem that the penetration consistency of the pole pieces of the cylindrical lithium battery in the art is poor, and the injection takes a long time.

### SUMMARY

The invention is defined in the appended claims.

In order to solve above object, the technical solution adopted in the present application is to provide a current collecting plate, which includes:
a circular current collecting plate, a center of the circular current collecting plate is provided with a central area, an edge of the circular current collecting plate is provided with at least one notch, and circumferences of concentric circles outside the central area of the circular current collecting plate are respectively provided with liquid guiding holes, a diameter of the liquid guiding hole of the concentric circles on an outer circle on the circular current collecting plate is larger than that of the liquid guiding hole on the concentric circles on an inner circle on the circular current collecting plate, and each liquid guiding hole and the notch are configured for guiding liquid for to a battery electrode group at a bottom of the circular current collecting plate; the circular current collecting plate is provided with a plurality of grooves, and a depth of each groove is greater than a thickness of the circular current collecting plate.

Further, the circular current collecting plate is provided with a plurality of grooves.

Further, each of the grooves extends along a radial direction of the circular current collecting plate.

Further, the grooves are formed by a top surface of the circular current collecting plate being recessed toward a bottom surface of the circular current collecting plate.

Further, the grooves are strip-shaped grooves.

Further, the circular current collecting plate is a positive electrode current collecting plate, and the central area is provided with a through hole.

Further, the notch is formed through a thickness direction of the circular current collecting plate.

The embodiment of the present application provides a cylindrical lithium battery, which includes the current collecting plate above-mentioned.

### BENEFICAL EFFECTS

The beneficial effect of the current collecting plate provided by the present application is that compared with the prior art, the current collecting plate of the present application is provided with liquid guiding holes and at least one notch is arranged on the edge of the circular current collecting plate, so that any concentric circular electrode sheet (battery electrode group) under the current collecting plate can form a liquid injection channel, then, the liquid injection channel can be formed in any concentric circular pole piece under the current collecting plate at the first time of liquid injection of the cylindrical lithium battery, so as to obtain the penetration of the electrolyte, which can effectively improve the consistency of the electrolyte penetration of the electrode sheet, reduce the time-consuming of liquid injection, and improve the product quality.

### BRIEF DESCRIPTION OF THE DRAWINGS

In order to illustrate the technical solutions in the embodiments of the present application more clearly, the following briefly introduces the accompanying drawings that need to be used in the description of the embodiments or the prior art. Obviously, the drawings in the following description are only for the present application. In some embodiments, for those of ordinary skill in the art, other drawings can also be obtained according to these drawings without any creative effort.
Fig. 1 is a schematic structural diagram of a current collecting plate provided by an embodiment of the present application as a positive electrode current collecting plate; and
Fig. 2 is a schematic structural diagram of a current collecting plate provided by an embodiment of the present application as a negative electrode current collecting plate.

The details of the symbols involved in the above drawings are as follows:
100-current collecting plate;
10-circular current collecting plate; 11-notch; 12-liquid guiding hole; 13-groove; 14-through hole; 15-central area.

### DETAILED DESCRIPTION

In order to make the technical problems, technical solutions and beneficial effects to be solved by the present application clearer, the present application will be described in further detail below with reference to the accompanying drawings and embodiments. It should be understood that the specific embodiments described herein are only used to explain the present application, but not to limit the present application.

It should be noted that when an element is referred to as being "fixed to" or "disposed on" another element, it can be directly on the other element or indirectly on the other element. When an element is referred to as being "connected to" another element, it can be directly connected to the other element or indirectly connected to the other element.

It is to be understood that the terms "length", "width", "upper", "lower", "front", "rear", "left", "right", "vertical", "horizontal", "top" , "bottom", "inside", "outside", etc. indicate the orientation or positional relationship based on the orientation or positional relationship shown in the accompanying drawings, only for the convenience of describing the present application and simplifying the description, rather than indicating or implying the indicated a device or element must have a particular orientation, be constructed and operate in a particular orientation, and therefore should not be construed as a limitation of the present application.

In addition, the terms "first" and "second" are only used for descriptive purposes, and should not be construed as indicating or implying relative importance or implying the number of indicated technical features. Thus, a feature defined as "first" or "second" may expressly or implicitly includes one or more of that feature. In the description of the present application, "plurality" means two or more, unless otherwise expressly and specifically defined.

In order to illustrate the technical solutions described in the present application, a detailed description is given below with reference to the specific drawings and embodiments.

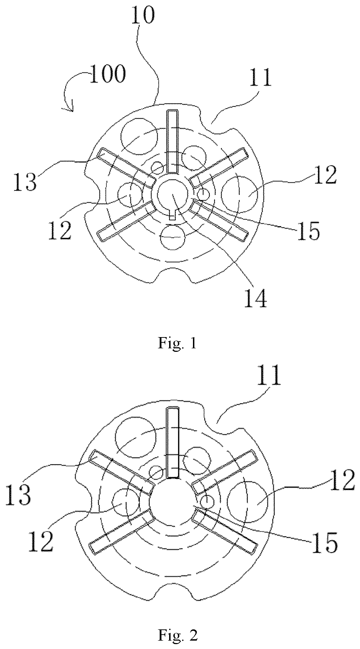

As shown in Fig. 1 and Fig. 2, an embodiment of the present application provides a current collecting plate 100, including a circular current collecting plate 10, a center of the circular current collecting plate 10 is provided with a central area 15, an edge of the circular current collecting plate 10 is provided with at least one notch 11, and circumferences of concentric circles of the circular current collecting plate 10 are respectively provided with a liquid guiding hole 2, and each liquid guiding hole 12 and the notch 11 are configured for guiding liquid for to a battery electrode group at a bottom of the circular current collecting plate 10.

The current collecting plate 100 provided in the embodiment of the present application is applied to a cylindrical lithium battery. The body of the current collecting plate is a circular current collecting plate 10, and at least one notch 11 is provided on the edge of the circular current collecting plate 10, or a plurality of notches 11 are arranged at intervals along the circumferential edge of the circular current collecting plate 10, and at the same time, liquid conducting holes 12 are respectively arranged on the circumferences of the concentric circles of the circular current collecting plate 10. When the battery electrode group (that is the concentric electrode sheets) on the bottom of the circular current collecting plate 10 is injected, the liquid can be guided through each concentric liquid guide hole 12 outside the central area of the circular current collecting plate 10 and the notch 11 at the edge of the circular current collecting plate 10, so that the cylindrical lithium battery can form a liquid injection channel for any concentric circular electrode piece under the current collecting plate 100 at the first time of liquid injection, and then obtain electrolyte penetration, which can effectively improve the consistency of electrode sheets electrolyte penetration, reduce the time-consuming of liquid injection, and improve product quality; therefore, the problem that in the prior art, when guiding liquid through the liquid guiding holes 12 on the current collecting plate, it is easy for a part of the area under the current collecting plate to fail to obtain electrolyte penetration for the first time, can be avoided.

In some embodiments of the present application, optionally, as shown in Fig. 1 and Fig. 2, the diameter of the liquid guiding hole 12 of the concentric circles on an outer circle on the circular current collecting plate 10 is larger than that of the liquid guiding hole 12 on the concentric circles on an inner circle on the circular current collecting plate 10.

In the embodiment, the diameter of the liquid guiding hole 12 of the concentric circles on an outer circle on the circular current collecting plate 10 is larger than that of the liquid guiding hole 12 on the concentric circles on an inner circle on the circular current collecting plate 10, that is, based on the center of the circular current collecting plate 10, a plurality of concentric circles are provided on the circular current collecting plate 10, the inner circle is the concentric circles with a smaller radius than the other concentric circles, and the outer circle is the concentric circles with a larger radius than the other concentric circles. With the diameter of the liquid guiding hole 12 of the concentric circles on the outer circle on the circular current collecting plate 10 is larger than that of the liquid guiding hole 12 on the concentric circles on the inner circle on the circular current collecting plate 10, the electrolyte of the electrode sheets under the current collecting plate can be penetrated more, since a plurality of outer circle electrode sheets are provided, which results in a large area and a large amount of electrolyte required. Therefore, the large-diameter liquid conducting holes 12 are adapted to the circular current collecting plate 10 to meet the requirements of the large area of the outer ring electrode sheet for electrolyte, to ensure product quality.

In some embodiments of the present application, optionally, as shown in Fig. 1 and Fig. 2, the circular current collecting plate 10 is provided with a plurality of grooves 13.

In the embodiment, the plurality of grooves 13 are provided on the circular current collecting plate 10, and the bottoms of the grooves 13 protrude from the bottom surface of the circular current collecting plate 10, in this way, the concave surface on the end surface of the battery electrode group below the circular current collecting plate 10 is matched, so that the current collecting plate and the end surface of the electrode group can be better positioned and fixed, which is convenient for laser welding, improves the production efficiency of the product, and reduces the production cost of the product and improves the market competitiveness of the product, compared with the end surface of the existing battery electrode group as a whole, the welding plate is formed after the whole end surface is flattened. The circular current collecting plate 10 is provided with the grooves 13 corresponding to the end surface of the battery electrode group to be flattened to facilitate welding, and other parts of the end surface of the battery electrode group are still in an upright state. It is easier to penetrate and improve the penetration efficiency of the electrolyte.

In the above-mentioned embodiment of the present application, optionally, as shown in Fig. 1 and Fig. 2, each of the grooves 13 is extended along the radial direction of the circular current collecting plate 10. Optionally, the grooves 13 are strip-shaped grooves.

In the embodiment, each groove 13 extends along the radial direction of the circular current collecting plate 10, that is, the center of the circular current collecting plate 10 is arranged in a reflective shape toward the circumferential direction of the circular current collecting plate 10, in this way, it is more stable and reliable when it is matched with the end surface of the electrode group.

In the above-mentioned embodiment of the present application, optionally, as shown in Fig. 1 and Fig. 2, the grooves 13 are formed by a top surface of the circular current collecting plate 10 being recessed toward a bottom surface of the circular current collecting plate 10. Optionally, a depth of each groove 13 is greater than a thickness of the circular current collecting plate 10.

In the embodiment, specifically, the grooves 13 are integrally formed by the top surface of the circular current collecting plate 10 being recessed toward the bottom surface thereof, so that the bottom of the groove 13 protrudes from the bottom surface of the circular current collecting plate 10, so that the grooves 13 form a convex structure on the bottom surface of the circular current collecting plate 10, so that it matches with the concave surface of the end surface of the electrode group, that is, the convex structure is inserted into the concave surface of the end surface of the electrode group to play the function of positioning and fixing.

In some embodiments of the present application, optionally, as shown in Fig. 1, the circular current collecting plate 10 is a positive current collecting plate, and the central area 15 is provided with a through hole 14.

In the embodiment, when the current collecting plate is the positive current collecting plate, the through hole 14 is provided in the central area 15 of the circular current collecting plate 10 to facilitate the insertion of the welding needle into the cell, and to complete the welding of the negative electrode liquid collecting sheet at the bottom of the cell and the battery shell, and the setting of the through hole 14 is used to facilitate the release of gas which is formed via electrochemical reactions during formation process, and the pressure inside the cylindrical lithium battery is released in time to ensure the safety of the battery.

In some embodiments of the present application, optionally, as shown in Fig. 1 and Fig. 2, the notches 11 are formed through the thickness direction of the circular current collecting plate 10.

In the embodiment, each notch 11 are in the shape of an arc, specifically, each notch 11 is a semicircle, and the semicircle notch 11 runs through the entire circular current collecting plate 10.

An embodiment of the present application provides a cylindrical lithium battery, including the current collecting plate 100 described in any of the above embodiments.

In some embodiments of the present application, optionally, a cylindrical lithium battery includes a battery case and an electrode group disposed in the battery case, and the current collecting plate 100 in any of the above embodiments is disposed at an end of the electrode group.

The cylindrical lithium battery provided by the embodiments of the present application has the current collecting plate 100 provided by any of the above embodiments, therefore, it has all the beneficial effects of the current collecting plate 100 provided by any of the above embodiments, and will not be repeated here.

Specifically, as shown in Fig. 1 and Fig. 2, the current collecting plate provided in this embodiment works as follows:
The current collecting plate is applied to the cylindrical lithium battery. The body of the current collecting plate is a circular current collecting plate 10, and a plurality of notches 11 are arranged on the edge of the circular current collecting plate 10, the notches are semicircular, and the notches are arranged at intervals along the circumferential edge of the circular current collecting plate 10, and at the same time, liquid guiding holes 12 are provided on the circumferences of the concentric circles of the circular current collecting plate 10 respectively. When the battery electrode group (that is the concentric electrode sheets) on the bottom of the circular current collecting plate 10 is injected, the liquid can be guided through each concentric liquid guide hole 12 outside the central area of the circular current collecting plate 10 and the notch 11 at the edge of the circular current collecting plate 10, so that the cylindrical lithium battery can form a liquid injection channel for any concentric circular electrode piece under the current collecting plate 100 at the first time of liquid inj ection, and then obtain electrolyte penetration, which can effectively improve the consistency of electrode sheets electrolyte penetration, reduce the time-consuming of liquid injection, and improve product quality; therefore, the problem that in the prior art, when guiding liquid through the liquid guiding holes 12 on the current collecting plate, it is easy for a part of the area under the current collecting plate to fail to obtain electrolyte penetration for the first time, can be avoided. In addition, the grooves 13 can also be provided on the circular current collecting plate 10, each groove 13 is extended along the radial direction of the circular current collecting plate 10, the grooves 13 are strip-shaped grooves, and the grooves 13 are formed by the top surface of the circular current collecting plate 10 being recessed toward the bottom surface thereof, and the depth of each groove 13 is greater than the thickness of the circular current collecting plate 10, so that it matches with the concave surface of the end surface of the electrode group, to make the current collecting plate and the end surface of the electrode group better positioned and fixed, which is convenient for laser welding, improves the production efficiency of the product, reduces the production cost of the product, and improves the market competitiveness of the product.

In summary, the current collecting plate and the cylindrical lithium battery provided by the present application are provided with liquid guiding holes and at least one notch is arranged on the edge of the circular current collecting plate, so that any concentric circular electrode sheet (battery electrode group) under the current collecting plate can form a liquid injection channel, then, the liquid injection channel can be formed in any concentric circular pole piece under the current collecting plate at the first time of liquid injection of the cylindrical lithium battery, so as to obtain the penetration of the electrolyte, which can effectively improve the consistency of the electrolyte penetration of the electrode sheet, reduce the time-consuming of liquid injection, and improve the product quality.

## Claims

1. A current collecting plate (100), comprising:
a circular current collecting plate (10), a center of the circular current collecting plate (10) is provided with a central area (15), an edge of the circular current collecting plate (10) is provided with at least one notch (11), and circumferences of concentric circles outside the central area (15) of the circular current collecting plate (10) are respectively provided with liquid guiding holes (12), a diameter of the liquid guiding hole (12) of the concentric circles on an outer circle on the circular current collecting plate (10) is larger than that of the liquid guiding hole (12) on the concentric circles on an inner circle on the circular current collecting plate (10), and each liquid guiding hole (12) and the notch (11) are configured for guiding liquid for to a battery electrode group at a bottom of the circular current collecting plate (10); and
wherein the circular current collecting plate (10) is provided with a plurality of grooves (13), and a depth of each groove (13) is greater than a thickness of the circular current collecting plate (10).

2. The current collecting plate according to claim 1, wherein each of the grooves (13) extends along a radial direction of the circular current collecting plate (10).

3. The current collecting plate according to claim 1, wherein the grooves (13) are formed by a top surface of the circular current collecting plate (10) being recessed toward a bottom surface of the circular current collecting plate (10).

4. The current collecting plate according to claim 3, wherein the grooves (13) are strip-shaped grooves.

5. The current collecting plate according to claim 1, wherein the circular current collecting plate (10) is a positive electrode current collecting plate and the central area (15) is provided with a through hole (14).

6. The current collecting plate according to claim 1, wherein the notch (11) is formed through a thickness direction of the circular current collecting plate (10).

7. A cylindrical lithium battery, comprising the current collecting plate as claimed in any one of claims 1 to 6.

## Patentansprüche

1. Stromsammelplatte (100), umfassend:
eine kreisförmige Stromsammelplatte (10), wobei ein Zentrum der kreisförmigen Stromsammelplatte (10) mit einem zentralen Bereich (15) bereitgestellt ist, ein Rand der kreisförmigen Stromsammelplatte (10) mit mindestens einer Kerbe (11) bereitgestellt ist und Umfänge von konzentrischen Kreisen außerhalb des zentralen Bereichs (15) der kreisförmigen Stromsammelplatte (10) jeweils mit Flüssigkeitsführungslöchern (12) bereitgestellt sind, ein Durchmesser des Flüssigkeitsführungslochs (12) der konzentrischen Kreise auf einem äußeren Kreis auf der kreisförmigen Stromsammelplatte (10) größer ist als der des Flüssigkeitsführungslochs (12) auf den konzentrischen Kreisen auf einem inneren Kreis auf der kreisförmigen Stromsammelplatte (10), und jedes Flüssigkeitsführungsloch (12) und die Kerbe (11) dafür ausgelegt sind, Flüssigkeit zu einer Batterieelektrodengruppe an einem Boden der kreisförmigen Stromsammelplatte (10) zu leiten; und
wobei die kreisförmige Stromsammelplatte (10) mit einer Vielzahl von Rillen (13) bereitgestellt ist und eine Tiefe jeder Rille (13) größer als eine Dicke der kreisförmigen Stromsammelplatte (10) ist.

2. Stromsammelplatte nach Anspruch 1, wobei sich jede der Rillen (13) entlang einer radialen Richtung der kreisförmigen Stromsammelplatte (10) erstreckt.

3. Stromsammelplatte nach Anspruch 1, wobei die Rillen (13) dadurch gebildet werden, dass eine obere Fläche der kreisförmigen Stromsammelplatte (10) in Richtung einer unteren Fläche der kreisförmigen Stromsammelplatte (10) zurückgesetzt ist.

4. Stromsammelplatte nach Anspruch 3, wobei die Rillen (13) streifenförmige Rillen sind.

5. Stromsammelplatte nach Anspruch 1, wobei die kreisförmige Stromsammelplatte (10) eine Stromsammelplatte mit positiver Elektrode ist und der zentrale Bereich (15) mit einem Durchgangsloch (14) bereitgestellt ist.

6. Stromsammelplatte nach Anspruch 1, wobei die Kerbe (11) durch eine Dickenrichtung der kreisförmigen Stromsammelplatte (10) ausgebildet ist.

7. Zylindrische Lithiumbatterie, umfassend die Stromsammelplatte nach einem der Ansprüche 1 bis 6.

## Revendications

1. Plaque collectrice de courant (100), comprenant :
une plaque collectrice de courant (10), un centre de cette plaque collectrice de courant (10) étant pourvu d'une zone centrale (15), un bord de cette plaque collectrice de courant circulaire (10) étant pourvu d'au moins une encoche (11), et les circonférences des cercles concentriques à l'extérieur de la sone centrale (15) de la plaque collectrice de courant circulaire (10) étant pourvues respectivement de trous de guidage de liquide (12), un diamètre du trou de guidage de liquide (12) des cercles concentriques sur un cercle extérieur sur la plaque collectrice de courant circulaire (10) étant plus grand que celui du trou de guidage de liquide (12) sur les cercles concentriques sur un cercle intérieur sur la plaque collectrice de courant circulaire (10), et chaque trou de guidage de liquide (12) et l'encoche (11) étant configurés de façon à guider un liquide pour un groupe d'électrodes de batterie à un fond de la plaque collectrice de courant circulaire (10) ; et
la plaque collectrice de courant circulaire (10) étant pourvue d'une pluralité de gorges (13), et une profondeur de chaque gorge (13) étant plus grande qu'une épaisseur de la plaque collectrice (10).

2. Plaque collectrice de courant selon la revendication 1, dans laquelle chacune des gorges (13) s'étend le long d'une direction radiale de la plaque collectrice de courant circulaire (10).

3. Plaque collectrice de courant selon la revendication 1, dans laquelle les gorges (13) sont formées par une surface supérieure de la plaque collectrice de courant circulaire (10) et sont renfoncées vers une surface inférieure de la plaque collectrice de courant circulaire (10) .

4. Plaque collectrice de courant selon la revendication 3, dans laquelle les gorges (13) sont des gorges en forme de bandes.

5. Plaque collectrice de courant selon la revendication 1, dans laquelle la plaque collectrice de courant circulaire (10) est une plaque collectrice de courant d'électrode positive et dans laquelle la zone centrale (15) est pourvue d'un trou débouchant (14).

6. Plaque collectrice de courant selon la revendication 1, dans lequel l'encoche (11) est formée à travers une direction d'épaisseur de la plaque collectrice de courant circulaire (10).

7. Batterie au lithium cylindrique, comportant la plaque collectrice de courant selon l'une quelconque des revendications 1 à 6.
